# EUROPEAN PATENT APPLICATION

(11) **EP 4 819 011 A1**
(43) Date of publication of application: **07.10.2026**
(21) Application number: 26168964.0
(22) Date of filing: 30.03.2026
(51) Int. Cl.: G06Q 20/18, G06Q 20/20, G06V 20/52, G07G 1/00

(54) **VISION-BASED PROCESSING OF UNRECOGNIZED SELF-CHECKOUT ITEMS**

(30) Priority: 31.03.2025 US 202519096151
(71) Applicant: NCR Voyix Corporation, Atlanta, GA 30308-1007 (US)
(72) Inventor: MORGAN, Kip Oliver, Atlanta, GA (US); KENNEDY, John, Lawrenceville, GA (US); BENNETT, Gina Torcivia, Lawrenceville, GA (US); MASSEY, Jerry Steven, Lawrenceville, GA (US); MASON, Timothy Edward, Hoschton, GA (US)
(74) Representative: Secerna LLP

(57) **Abstract**

Methods and systems for a vision-based processing of unrecognized items in self-checkout (SCO) environments that create visual exclusion zones for previously identified items. Top-down camera views are used to generate bounding boxes around items, comparing aspect ratios and center points to determine if items have moved. After an unrecognized item is identified through scanning or selection, a dead zone is created in that region, preventing repeated prompting for the same item while allowing new items to be detected. The dead zone is automatically cleared when the area is empty or when a new item with different characteristics appears in that location, improving transaction speed, accuracy, and customer experience while reducing the need for attendant intervention.

## Description

### Background

Vision checkout systems in retail environments face significant challenges when customers place items on the tray that cannot be individually distinguished by the self-checkout (SCO) system. Current solutions require users to remove unrecognized items from the tray, creating confusion and frustration, especially when multiple items are present. This leads to slower transactions, reduced accuracy, and an overall diminished customer experience, ultimately requiring more attendant interventions and reducing the efficiency of SCO systems.

### Summary

According to a first aspect of the present invention there is provided a method comprising:
obtaining, by a vision-based self-checkout (SCO) terminal, image data of at least one item on a tray;
determining that the at least one item is an unrecognized item;
receiving an identification of an identified item associated with the unrecognized item;
creating a visual exclusion zone corresponding to a location of the identified item; and
ignoring subsequent detection of the identified item within the visual exclusion zone.

Aptly, wherein obtaining the image data comprises capturing the image data using a top-down camera view of the tray.

Aptly, wherein determining that the at least one item is the unrecognized item comprises determining that the unrecognized item cannot be individually distinguished by the vision-based SCO terminal.

Aptly, wherein receiving the identification comprises receiving a selection of the identified item from a list of suggested items displayed on a user interface.

Aptly, wherein receiving the identification comprises receiving scan data from scanning a barcode of the unrecognized item to obtain the identification of the identified item.

Aptly, wherein creating the visual exclusion zone comprises defining a bounding box around the unrecognized item based on the image data.

Aptly, wherein ignoring subsequent detection comprises maintaining the visual exclusion zone until a payment is started.

Aptly, the method further comprises:
determining that the visual exclusion zone is empty based on the image data; and
maintaining the visual exclusion zone.

Aptly, the method further comprises:
detecting a new item in the visual exclusion zone;
comparing at least one of a center point, size, or aspect ratio of the new item to corresponding characteristics of the identified item; and clearing the visual exclusion zone when a comparison indicates the new item is different from the identified item.

Aptly, the method further comprises:
determining that the identified item has been removed from the tray based on a reduction in an item count detected by the vision-based SCO terminal; and
skipping a bagging confirmation prompt.

Aptly, the method further comprises:
maintaining the visual exclusion zone when a center point, size, and aspect ratio of a particular item in the visual exclusion zone have not varied significantly from corresponding characteristics of the identified item.

According to a first aspect of the present invention there is provided a method comprising:
capturing, using at least one camera of a vision-based self-checkout (SCO) terminal, top-down image data of one or more items on a checkout tray;
identifying at least one unrecognized item from the one or more items;
presenting a user interface for identifying the at least one unrecognized item;
receiving user input identifying the at least one unrecognized item as an identified item;
generating a dead zone corresponding to a location of the identified item; and
preventing re-prompting for identification of the identified item while the identified item remains in the dead zone.

Aptly, wherein capturing the top-down image data comprises generating, within the top-down image data, bounding boxes around each of the one or more items on the checkout tray.

Aptly, wherein identifying the at least one unrecognized item comprises determining that the at least one unrecognized item is visually indistinguishable from other items that are similar to the at least one unrecognized item.

Aptly, wherein presenting the user interface comprises displaying at least one suggested item based on visual characteristics of the at least one unrecognized item.

Aptly, wherein preventing re-prompting comprises maintaining item identification data associated with the dead zone until a transaction is completed.

Aptly, the method further comprises:
detecting a change in the dead zone;
analyzing the change to determine when a new item with different visual characteristics has been placed in the dead zone; and automatically clearing the dead zone when the new item is detected.

Aptly, the method further comprises:
tracking a total number of items on the checkout tray;
detecting removal of the identified item from the checkout tray based on a change in the total number of items; and
automatically proceeding with a transaction without requiring confirmation of item removal.

According to a third aspect of the present invention there is provided a system comprising:
at least one camera configured to capture image data of at least one item on a checkout tray;
at least one processor; and
at least one memory to store instructions that, when executed by the at least one processor, cause the system to:
   analyze the image data to identify at least one unrecognized item on the checkout tray;
   receive identification information for an identified item associated with the at least one unrecognized item;
   create an exclusion region corresponding to a location of the identified item in the image data;
   compare subsequent image data of the exclusion region with stored characteristics of the identified item; and
   maintain the exclusion region when a comparison indicates the identified item remains in the exclusion region.

Aptly, wherein the instructions, when executed by the at least one processor, further cause the system to:
detect placement of a new item in the exclusion region;
determine that the new item has at least one of a different center point,
different size, or different aspect ratio compared to the identified item; and
clear the exclusion region to enable identification of the new item.

### Brief Description of the Drawings

FIG. 1 is a diagram of a system for vision-based processing of unrecognized self-checkout (SCO) items, according to an example embodiment.
FIG. 2 is a flow diagram of a method for vision-based processing of unrecognized SCO items, according to an example embodiment.
FIG. 3 is an example user interface (UI) screen associated with an unrecognized SCO item, according to an example embodiment.
FIG. 4 is an example UI screen associated with a customer identifying the unrecognized SCO item, according to an example embodiment.
FIG. 5 is an example UI screen associated with a visual exclusion zone that is associated with the customer identified SCO item, according to an example embodiment.
FIG. 6 is a flow diagram of a method for processing a vision-based unrecognized SCO item, according to an example embodiment.
FIG. 7 is a flow diagram of another method for processing a vision-based unrecognized SCO item, according to an example embodiment.

### Detailed Description

Too many vision checkout transactions currently require attendant intervention, creating bottlenecks in the self-checkout (SCO) process. The unrecognized item handling user interface flow is confusing and cumbersome for customers, negatively impacting their acceptance of vision checkout technology. This problem is compounded by the constant addition of new items to a store's database and changes in product packaging, which means there will continually be unrecognized items appearing in transactions. Certain items, such as salads, coffees, and sandwiches, will always be indistinguishable from similar items from a vision perspective, creating persistent recognition challenges.

The current approach of requiring customers to remove unrecognized items from the tray after identification leads to several problems: repeating recognition loops, double item sales, or accidentally removing items from transactions entirely. Many stores lack additional counter space for customers to move items aside, and tracking individual items via camera is extremely resource-intensive, requiring expensive equipment. Customers find it frustrating to move certain items aside while leaving others on the tray, creating an inconsistent and confusing experience.

The technical challenge in vision checkout systems is accurately tracking items between video frames, which is complicated by the discrete nature of video capture and the similar appearance of many retail items. For example, if another coffee appears on the tray in a similar location to a previously identified coffee, it is nearly impossible for the system to determine if it is the same coffee or a new one. Current systems lack an efficient method to visually distinguish between previously identified items and new items placed in similar locations, leading to redundant prompts, erroneous sales, and customer frustration. Additionally, the technical limitations of camera-based item tracking make it difficult to maintain accurate item counts without forcing customers to completely remove items from the vision area.

The technology disclosed herein provides a technical solution to at least the aforementioned technical problems by visually excluding regions where items have been sold until tendering is started or until specific conditions are met. This is accomplished by the comparing aspect ratio and center point of top-down bounding boxes to ensure that previously recognized item locations have not moved significantly and can be ignored. In an embodiment, the bounding boxes may include bounding rectangles. The methods and system create 'dead zones' from the top-down image to ignore item activity after an item has been identified in that zone, and automatically erases these dead zones if an item appears in that area with a different center point, area, and aspect ratio, indicating the previously detected item has been removed.

In an embodiment, the methods and system mitigate showing an unrecognized item screen twice for the same item by visually excluding the region where the item was sold until tendering is started. When a customer touches a suggested item on the screen without disturbing the position of existing items on the tray, the methods and system create a blocked region corresponding to that item's location. If the item is scanned, the customer necessarily picks it up, moving it from its original location. As the customer places the item in the bagging area, the methods and system can skip the "done bagging" confirmation if the vision item count has been reduced by one. The blocked region does not remain blocked for the entire transaction under certain conditions. If the vision methods and system determine that the area is empty from the top-down point of view, the blocked-out rectangle is cleared, allowing the methods and system to look for items in that area again. Similarly, if another item is placed in that location with an aspect ratio and/or center point sufficiently different from the sold item, the methods and system determine that a new item is present and clears the blocking box. However, if an item remains in that location with minimal variation in center point, size, and aspect ratio, the methods and system assume it is the same previously identified item and does not prompt the user again.

The visual exclusion zone or dead zone approach provides a technology that allows customers to keep previously identified items on the tray while preventing the system 100 from repeatedly prompting for identification of the same item. This significantly reduces the need for attendant intervention, improves transaction speed and accuracy, and enhances the overall customer experience. By using a top-down camera view and bounding box information, the embodiments presented herein are computationally efficient while effectively solving the problem of repeated item recognition by conventional vision-based checkout systems.

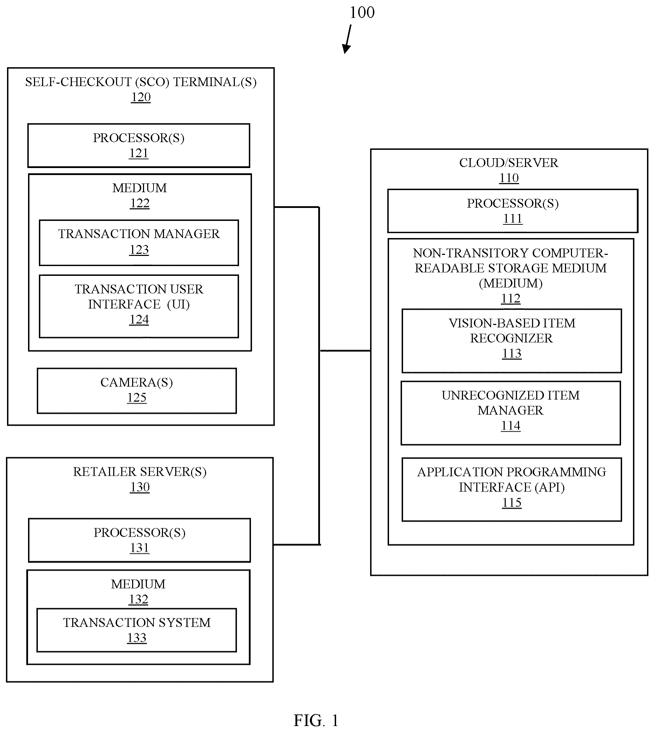

FIG. 1 is a diagram of a system 100 for vision-based processing of unrecognized self-checkout (SCO) items, according to an example embodiment. Notably, the components are shown schematically in simplified form, with only those components relevant to understanding of the embodiments being illustrated.

Furthermore, the various components (that are identified in system 100) are illustrated and the arrangement of the components are presented for purposes of illustration only. Notably, other arrangements with more or less components are possible without departing from the teachings of vision-based processing of unrecognized SCO items, presented herein and below.

System 100 includes a cloud 110, one or more SCO terminals 120, and one or more retailer servers 130. Cloud 110 includes at least one processor 111 and a non-transitory computer-readable storage medium (hereinafter "medium") 112, which includes instructions for vision-based item recognizer 113, unrecognized item manager 114, and an application programming interface(API) 115. The instructions when executed by processor 111 cause processor 111 to perform processing or operations discussed herein and below with respect to 113-115.

Each SCO terminal 120 includes at least one processor 121 and a medium 122 having instructions for at least a transaction manager 123 and a transaction user interface (UI) 124. The instructions when executed by the processor 121 cause the processor 121 to perform operations associated with the 123-124.

Each SCO terminal 120 also is interfaced to at least one camera 125. In an embodiment, the camera 125 is a top-down camera with a field-of-view directed downward onto a tray or countertop of the SCO terminal 120.

Each retailer server 130 includes at least one processor 131 and a medium 132, which includes instructions for a transaction system 133. The instructions when executed by processor 131 cause processor 131 to perform processing or operations discussed herein and below with respect to 133.

The vision-based item recognizer 113 is responsible for analyzing image data to identify items placed on an SCO terminal's tray during an SCO transaction. When items cannot be individually distinguished, the unrecognized item manager 114 comes into play. This manager implements the "dead zone" or "visual exclusion zone" by altering the image data passed to the vision-based item recognizer 113. This prevents the vision-based item recognizer 113 from continually trying to recognize an item once it is identified and accounted for in the dead or visual exclusion zone.

The unrecognized item manager 114 creates and manages visual exclusion zones for previously identified items that were initially unrecognized. It monitors these zones and determines when to clear them based on specific conditions, such as when an item with different visual characteristics appears in the zone. This directly addresses the technical problem associated with tracking items between video frames due to the discrete nature of video frames and the similar looks of items.

The API 115 facilitates communication between the vision-based item recognizer 113, the unrecognized item manager 114, and the transaction manager 123 on the SCO terminal 120. This API 115 enables the seamless integration of the system 100 with the vision-based transaction processing.

The transaction manager 123 controls the overall transaction flow, including handling payments and item registration. It communicates with the vision-based item recognizer 113 and unrecognized item manager 114 through the API 115 to integrate vision-based item recognition into the checkout process.

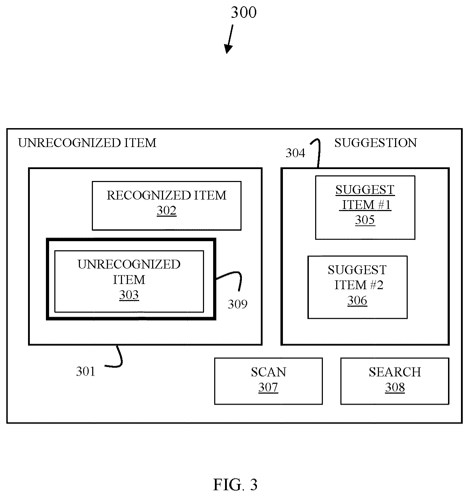

The transaction UI 124 presents the interfaces screens, example screens shown in FIGS. 3-5 below, allowing users to interact with the system 100 when unrecognized items are detected. The transaction UI 124 displays the tray image with recognized and unrecognized items, suggested items, and options for scanning or searching for items.

The camera(s) 125 capture(s) a top-down view of the checkout tray, providing the image data that is analyzed by the vision-based item recognizer 113. The top-down view provided within the image data allows the unrecognized item manager 114 to determine when a same item or a new item appears in a given location on the tray or not.

The retailer server(s) 130 with processor(s) 131 and medium 132 host the transaction system 133, which manages the overall retail transaction processing. This transaction system 133 communicates with the transaction manager 123 on the SCO terminal 120 to process SCO transaction, process payments, update inventory, and maintain transaction records.

In a practical implementation, the system 100 operates as follows. A customer places multiple items on the SCO terminal tray, including a coffee cup that cannot be individually distinguished by the vision-based item recognizer 113. The camera(s) 125 capture the top-down view of the tray, and the vision-based item recognizer 113 analyzes the image data. The vision-based item recognizer 113 identifies the coffee cup as an unrecognized item and communicates this to the transaction manager 123 via the API 115.

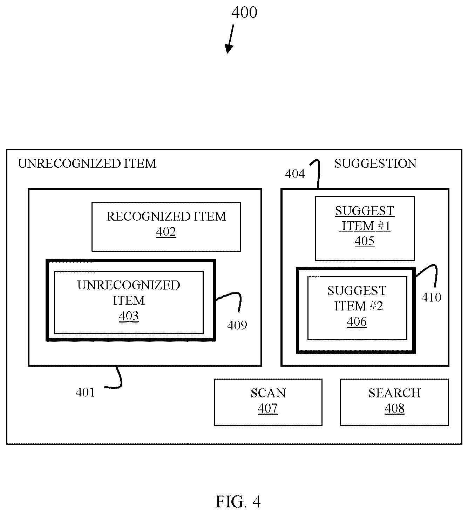

The transaction manager 123 instructs the transaction UI 124 to display the unrecognized item screen (as shown in FIG. 3), highlighting the unrecognized item and presenting suggested items. The customer selects the correct item from the suggestions (as shown in FIG. 4). The unrecognized item manager 114 creates a visual exclusion zone within subsequent image data of SCO tray, the visual exclusion zone corresponds to the location, region, or area of the identified coffee cup. This ensures that as long as subsequent image data of the tray does not include a different item that the vision-based item recognizer 113 will not keep trying to sell the item during an SCO transaction.

If the customer places another item in the same location with different visual characteristics (e.g., a different size or shape), the unrecognized item manager 114 detects this change by comparing aspect ratio and center point of top-down bounding boxes and clears the exclusion zone within the image data, allowing the vision-based item recognizer 113 to identify the new item. The SCO transaction continues without repeatedly prompting the customer about the previously identified coffee cup, improving the checkout experience by requiring fewer attendant interventions.

System 100 directly addresses technical problems associated with vision-based SCO checkouts by reducing attendant interventions and improving unrecognized item handling process flows that are currently cumbersome and confusing. Furthermore, system 100 allows customers to keep previously identified items on the tray while preventing repeated prompts for a same unrecognized item.

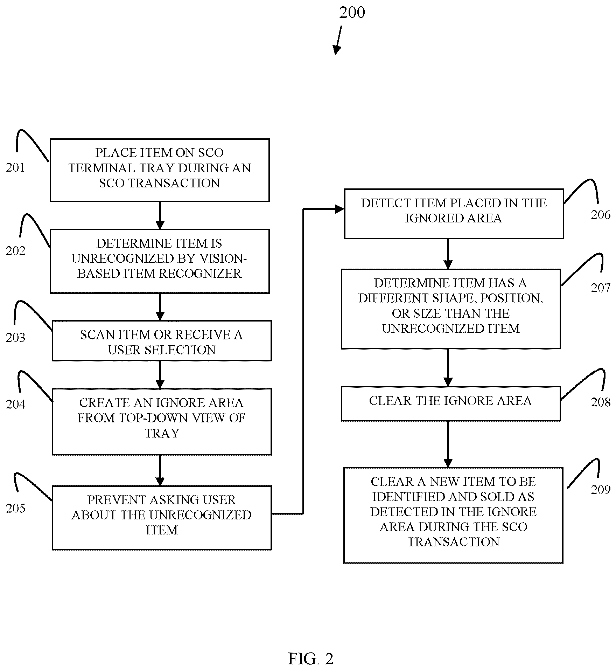

Having established the system architecture and component relationships in FIG. 1, the operational aspects of the system are discussed as illustrated in FIGS. 2-5. FIG. 2 provides a flow diagram of the method 200 for vision-based processing of unrecognized SCO items, while FIGS. 3-5 demonstrate the transaction UI 124 progression as an unrecognized item is detected, identified, and subsequently managed through the visual exclusion zone functionality. These FIGS. collectively illustrate how the components described in FIG. 1 work together to provide an improved SCO experience for customers using vision-based self-checkout terminals 120.

FIG. 2 is a flow diagram of a method 200 for vision-based processing of unrecognized SCO items, according to an example embodiment. Unrecognized item manager 114 implements method 200.

At 201, the unrecognized item manager 114, detects that an item is placed on the SCO terminal tray during an SCO transaction based on image data captured by camera 125. At 202, the unrecognized item manager 114 determines that the item is unrecognized based on outputted suggested items for the item provided by vision-based item recognizer 113.

At 203, the unrecognized item manager 114, detects that the customer has scanned a barcode or selected a suggested item associated with the unrecognized item such that transaction manager 123 now has an item identification for the unrecognized item. At 204, the unrecognized item manager 114 creates an ignore area from the top-down view within the image data for the location or area previously occupied by the item. This prevents vision-based item recognizer 113 from asking the customer or user about the unrecognized item during the SCO transaction.

At 206, the unrecognized item manager 114 detects an item placed in the ignore area. At 207, the unrecognized item manager 114 determines if the item has a different shape, position, or size than the original unrecognized item. At 208, the unrecognized item manager 114 clears the ignore area when the item is different from the original unrecognized item. At 209, the unrecognized item manager 114 by removing the ignore area from the image data, permits the vision-based item recognizer 113 to process the previous ignore area within the image data in an attempt to visually identify the new item during the SCO transaction.

FIG. 3 is an example user interface (UI) screen 300 associated with an unrecognized SCO item, according to an example embodiment. The screen 300 has two main areas: area 301, which displays an image captured by the camera(s) 125 showing the checkout tray with recognized items 302 and an unrecognized item 303; and area 304, which presents suggestion options for the unrecognized item. The suggestion area includes suggested items (305, 306) that the vision-based item recognizer 113 has determined as potential matches for the unrecognized item 303.

The transaction UI 124 provides the user with multiple options to identify the unrecognized item: selecting one of the suggested items, scanning the item using the scan button 307, or searching for the item using the search button 308. The user can select the unrecognized item 303 as indicated by selection 309, which highlights the item in the tray image to help the user understand which item needs identification. This transaction UI 124 facilitates the user's interaction with the system 100 to resolve unrecognized item issues efficiently.

FIG. 4 is an example UI screen 400 associated with a customer identifying the unrecognized SCO item, according to an example embodiment. FIG. 4 shows a transaction UI screen 400 that is similar to FIG. 3 but illustrates the user's selection of a suggested item. The screen 400 maintains the same layout with area 401 showing the tray image containing recognized items 402 and an unrecognized item 403, and area 404 displaying suggestion options. The suggested items (405, 406) are presented as potential matches for the unrecognized item, along with scan 407 and search 408 options.

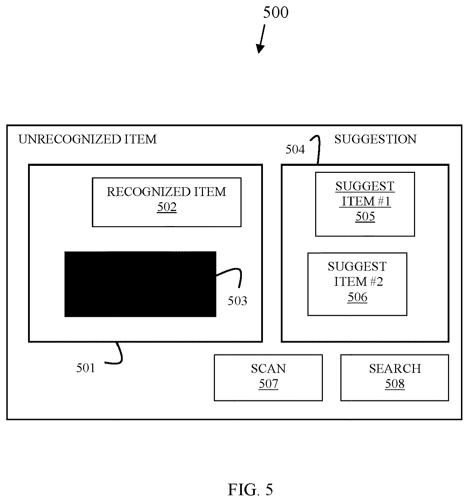

In FIG. 4, the user has selected the unrecognized item as indicated by selection 409 and has chosen "Suggest Item #2" as indicated by selection 410. This selection process allows the user to identify the unrecognized item without having to remove it from the tray, which improves the efficiency of the checkout process. Once the selection is made, the system 100 will proceed to create an exclusion zone for this item as shown in FIG. 5.

FIG. 5 is an example UI screen 500 associated with a visual exclusion zone that is associated with the customer identified SCO item, according to an example embodiment. FIG. 5 depicts a transaction user interface screen 500 that shows the state after the user has identified an unrecognized item, as illustrated in FIG. 4. The screen 500 maintains the same layout with area 501 showing the tray image containing recognized items 502 and the previously unrecognized item 503 that has now been identified. Area 504 continues to display suggestion options (505, 506) along with scan 507 and search 508 options.

A difference in FIG. 5 is that the unrecognized item manager 114 has created a dead or exclusion zone within the image data for the previously unrecognized item 503. This prevents the vision-based item recognizer 113 from repeatedly attempting to recognize this item, which would otherwise lead to multiple prompts for the same item. The unrecognized item manager 114 continues to monitor this exclusion zone, and if a new item with different characteristics is placed in this area, it will remove the exclusion zone from the image data passed to the vision-based item recognizer 113, allowing it to attempt to recognize the new item. This approach significantly improves the checkout experience by reducing unnecessary prompts while maintaining the system's ability to detect new items.

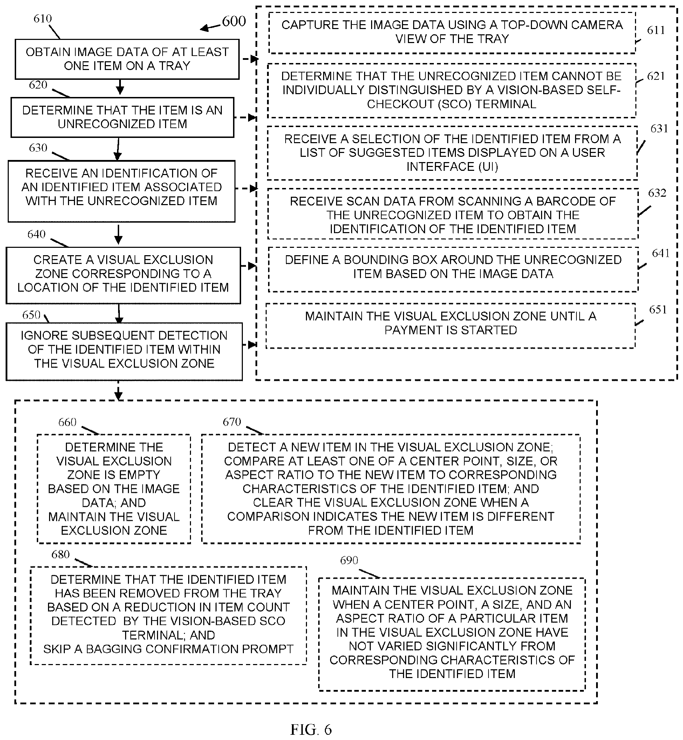

FIG. 6 is a flow diagram of a method 600 for processing a vision-based unrecognized SCO item, according to an example embodiment. The software module(s) that implements the method 600 is referred to as an "unrecognized item SCO assistant." The unrecognized item SCO assistant is implemented as executable instructions programmed and residing within memory and/or a non-transitory computer-readable (processor-readable) storage medium and executed by one or more processors of one or more devices. The processor(s) of the device(s) that executes the unrecognized item SCO assistant are specifically configured and programmed to process the unrecognized item SCO assistant. The unrecognized item SCO assistant may have access to one or more network connections during its processing. The network connections can be wired, wireless, or a combination of wired and wireless.

In an embodiment, the devices that execute the unrecognized item SCO assistant are cloud 110 and/or SCO terminal 120. In an embodiment, the unrecognized item SCO assistant is vision-based item recognizer 113, unrecognized item manager 114, API 115, transaction manager 123, and/or transaction UI 124.

At 610, the unrecognized item SCO assistant obtains image data depicting at least one item on an SCO tray. In an embodiment, at 611, the unrecognized item SCO assistant captures the image data using a top-down camera view of the tray.

At 620, the unrecognized item SCO assistant determines that the item is an unrecognized item. In an embodiment, at 621, the unrecognized item SCO assistant determines that the unrecognized item cannot be individually distinguished by a vision-based SCO terminal 120.

At 630, the unrecognized item SCO assistant receives an identification of an identified item associated with the unrecognized item. In an embodiment, at 631, the unrecognized item SCO assistant receives a selection of the identified item from a list of suggested items displayed on a transaction UI 124 of the vision-based SCO terminal 120. In an embodiment, at 632, the unrecognized item SCO assistant receives scan data from scanning a barcode of the unrecognized item to obtain the identification of the identified item.

At 640, the unrecognized item SCO assistant creates a visual exclusion zone corresponding to a location of the identified item within the image data depicting the tray. In an embodiment, at 641, the unrecognized item SCO assistant defines a bounding box around the unrecognized item based on and within the image data.

At 650, the unrecognized item SCO assistant ignores subsequent detection of the identified item within the visual exclusion zone of the image data. In an embodiment, at 651, the unrecognized item SCO assistant maintains the visual exclusion zone until a payment is started as indicated by a transaction manager 123 of the SCO terminal 120.

In an embodiment, at 660, the unrecognized item SCO assistant determines the visual exclusion zone is empty based on the image data. The unrecognized item SCO assistant maintains the visual exclusion zone within the image data as this is an indication that the customer most likely bagged the identified item once identified.

In an embodiment, at 670, the unrecognized item SCO assistant detects a new item in the visual exclusion zone from the image data. The unrecognized item SCO assistant compares at least one of a center point, a size, or an aspect ratio to the new item to corresponding characteristics of the identified item. The unrecognized item SCO assistant clears the visual exclusion zone when the comparison indicates that the new item is different from the identified item.

In an embodiment, at 680, the unrecognized item SCO assistant determines that the identified item has been removed from the tray based on a reduction in item count detected by the vision-based SCO terminal 120. The unrecognized item SCO assistant skips a bagging confirmation prompt as a further indication that the customer most likely bagged the identified item.

In an embodiment, at 690, the unrecognized item SCO assistant maintains the visual exclusion zone when a center point, a size, and an aspect ratio of a particular item in the visual exclusion zone have not varied significantly from corresponding characteristics of the identified item. This is an indication that the identified item remains within the visual exclusion zone during the SCO transaction.

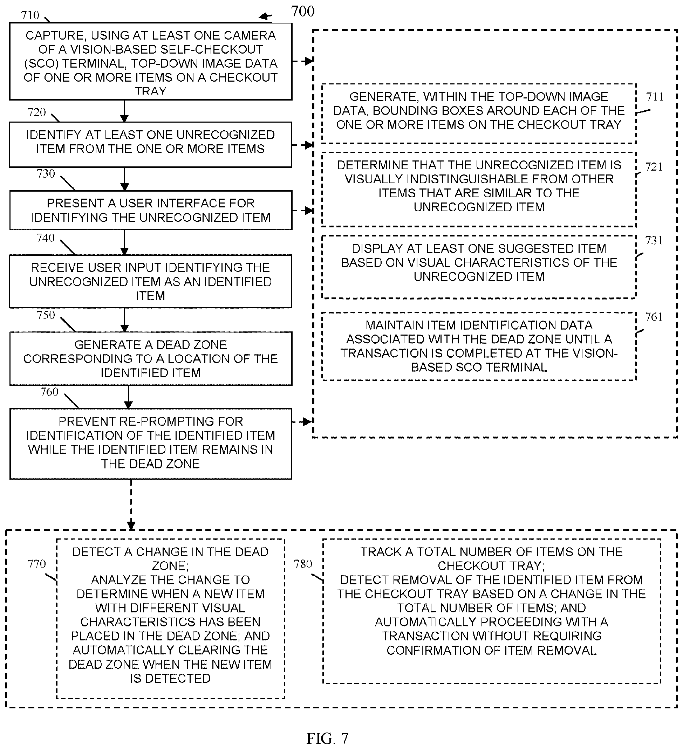

FIG. 7 is a flow diagram of another method 700 for processing a vision-based unrecognized SCO item, according to an example embodiment. The software module(s) that implements the method 700 is referred to as a "vision-based SCO assistant." The vision-based SCO assistant is implemented as executable instructions programmed and residing within memory and/or a non-transitory computer-readable (processor-readable) storage medium and executed by one or more processors of one or more device(s). The processors that execute the vision-based SCO assistant are specifically configured and programmed for processing the vision-based SCO assistant. In an embodiment, the vision-based SCO assistant may have access to one or more network connections during its processing. The network connections can be wired, wireless, or a combination of wired and wireless.

In an embodiment, the device that executes the vision-based SCO assistant is cloud 110 and/or SCO terminal 120. In an embodiment, the vision-based SCO assistant is vision-based item recognizer 113, unrecognized item manager 114, API 115, transaction manager 123, transaction UI 124, and/or method 600. The vision-based SCO assistant presents another and, in some ways, an enhanced processing perspective from that which was described above for method 600 of FIG. 6.

At 710, the vision-based SCO assistant captures, using at least one camera 125 of a vision-based SCO terminal 120, image data of one or more items on a checkout tray. In an embodiment, at 711, the vision-based SCO assistant generates, within the top-down image data, bounding boxes around each of the one or more items on the checkout tray.

At 720, the vision-based SCO assistant identifies at least one unrecognized item from the one or more items. In an embodiment, at 721, the vision-based SCO assistant determines that the unrecognized item is visually indistinguishable from other items that are similar to the unrecognized item.

At 730, the vision-based SCO assistant presents a transaction UI 124 for identifying the unrecognized item. In an embodiment, at 731, the vision-based SCO assistant displays at least one suggested item based on visual characteristics of the unrecognized item.

At 740, the vision-based SCO assistant receives user input identifying the unrecognized item as an identified item. At 750, the vision-based SCO assistant generates a dead zone within the top-down image data that corresponds to a location of the identified item on the checkout tray.

At 760, the vision-based SCO assistant prevents re-prompting for identification of the identified item while the identified item remains in the dead zone or is removed from the dead zone. In an embodiment, at 761, the vision-based SCO assistant maintains item identification data associated with the dead zone until a transaction is completed at the vision-based SCO terminal 120.

In an embodiment, at 770, the vision-based SCO assistant detects a change in the dead zone within the image data and analyzes the change to determine when a new item with different visual characteristics from the identified item has been placed in the dead zone. The vision-based SCO assistant automatically clears the dead zone when the new item is detected from the image data as being within the dead zone.

In an embodiment, at 780, the vision-based SCO assistant tracks a total number of items on the checkout tray and further detects removal of the identified item from the checkout tray based on a change in the total number of items. The vision-based SCO assistant automatically proceeds with a transaction without requiring confirmation of item removal.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method comprising:
obtaining, by a vision-based self-checkout (SCO) terminal, image data of at least one item on a tray;
determining that the at least one item is an unrecognized item;
receiving an identification of an identified item associated with the unrecognized item;
creating a visual exclusion zone corresponding to a location of the identified item; and
ignoring subsequent detection of the identified item within the visual exclusion zone.

2. The method of claim 1, wherein obtaining the image data comprises capturing the image data using a top-down camera view of the tray.

3. The method of any preceding claim, wherein determining that the at least one item is the unrecognized item comprises determining that the unrecognized item cannot be individually distinguished by the vision-based SCO terminal.

4. The method of any preceding claim, wherein receiving the identification comprises receiving a selection of the identified item from a list of suggested items displayed on a user interface; or
wherein receiving the identification comprises receiving scan data from scanning a barcode of the unrecognized item to obtain the identification of the identified item.

5. The method of any preceding claim, wherein creating the visual exclusion zone comprises defining a bounding box around the unrecognized item based on the image data; and/or
wherein ignoring subsequent detection comprises maintaining the visual exclusion zone until a payment is started.

6. The method of any preceding claim, further comprising:
determining that the visual exclusion zone is empty based on the image data; and
maintaining the visual exclusion zone.

7. The method of any preceding claim, further comprising:
detecting a new item in the visual exclusion zone;
comparing at least one of a center point, size, or aspect ratio of the new item to corresponding characteristics of the identified item; and
clearing the visual exclusion zone when a comparison indicates the new item is different from the identified item.

8. The method of any preceding claim, further comprising:
determining that the identified item has been removed from the tray based on a reduction in an item count detected by the vision-based SCO terminal; and
skipping a bagging confirmation prompt; and/or
maintaining the visual exclusion zone when a center point, size, and aspect ratio of a particular item in the visual exclusion zone have not varied significantly from corresponding characteristics of the identified item.

9. A method comprising:
capturing, using at least one camera of a vision-based self-checkout (SCO) terminal, top-down image data of one or more items on a checkout tray;
identifying at least one unrecognized item from the one or more items;
presenting a user interface for identifying the at least one unrecognized item;
receiving user input identifying the at least one unrecognized item as an identified item;
generating a dead zone corresponding to a location of the identified item; and
preventing re-prompting for identification of the identified item while the identified item remains in the dead zone.

10. The method of claim 9, wherein capturing the top-down image data comprises generating, within the top-down image data, bounding boxes around each of the one or more items on the checkout tray.

11. The method of claim 9 or 10, wherein identifying the at least one unrecognized item comprises determining that the at least one unrecognized item is visually indistinguishable from other items that are similar to the at least one unrecognized item; and/or
wherein presenting the user interface comprises displaying at least one suggested item based on visual characteristics of the at least one unrecognized item.

12. The method of any one of claims 9 to 11, wherein preventing re-prompting comprises maintaining item identification data associated with the dead zone until a transaction is completed; and/or
detecting a change in the dead zone;
analyzing the change to determine when a new item with different visual characteristics has been placed in the dead zone; and
automatically clearing the dead zone when the new item is detected.

13. The method of any one of claims 9 to 12, further comprising:
tracking a total number of items on the checkout tray;
detecting removal of the identified item from the checkout tray based on a change in the total number of items; and
automatically proceeding with a transaction without requiring confirmation of item removal.

14. A system comprising:
at least one camera configured to capture image data of at least one item on a checkout tray;
at least one processor; and
at least one memory to store instructions that, when executed by the at least one processor, cause the system to:
analyze the image data to identify at least one unrecognized item on the checkout tray;
receive identification information for an identified item associated with the at least one unrecognized item;
create an exclusion region corresponding to a location of the identified item in the image data;
compare subsequent image data of the exclusion region with stored characteristics of the identified item; and
maintain the exclusion region when a comparison indicates the identified item remains in the exclusion region.

15. The system of claim 14, wherein the instructions, when executed by the at least one processor, further cause the system to:
detect placement of a new item in the exclusion region;
determine that the new item has at least one of a different center point, different size, or different aspect ratio compared to the identified item; and
clear the exclusion region to enable identification of the new item.
